# EUROPÄISCHE PATENTANMELDUNG

(11) **EP 1 793 016 A1**
(43) Veröffentlichungstag der Anmeldung: **06.06.2007**
(21) Anmeldenummer: 05026161.9
(22) Anmeldetag: 01.12.2005
(51) Int. Cl.: C23F 3/06, C23F 1/44, C23F 1/28, C23G 1/08, C09G 1/04

(54) **Polier- und Entgratungsmittel für Werkstücke aus Kohlenstoffstahl und Verfahren zum chemischen Polieren und Entgraten**

(71) Anmelder: Elpochem AG, 8123 Ebmatingen (CH)
(72) Erfinder: Romann, Jürg, 8610 Uster (CH)
(74) Vertreter: Felder, Peter

(57) **Zusammenfassung**

Ein Polier- und Entgratungsmittel für Werkstücke aus Kohlenstoffstahl enthält Wasserstoffperoxid und Fluorwasserstoffsäure sowie wenigstens einen Stabilisator für Wasserstoffperoxid. Das Polier- und Entgratungsmittel ist im Wesentlichen ammoniumfrei, die Konzentration der Fluorwasserstoffsäure beträgt 0,1 bis 10 Gew.-% und das molare Verhältnis von Fluorwasserstoffsäure zu Wasserstoffperoxid beträgt 0,1 bis 1,4.

## Beschreibung

### Technisches Gebiet

Die vorliegende Erfindung betrifft ein Polier- und Entgratungsmittel gemäss dem Oberbegriff des Anspruchs 1 sowie ein Verfahren zum chemischen Polieren und Entgraten von Werkstücken aus Kohlenstoffstahl.

### Stand der Technik

Das chemische Polieren und Entgraten von Metalloberflächen wird in der Technik vielfach angewendet, um kleinere oder grössere Gegenstände aus Metall zu behandeln. Aufgrund der stark zunehmenden Verwendung von Kohlenstoff-Stählen im Bereich Apparatebau, Textilmaschinenkomponenten, Fahrzeugbau (wie z.B. Antiblockiersystem-Komponenten, Benzinpumpengehäuse, Commonrail-Technik) gewinnt die Oberflächenbearbeitung dieser Werkstoffe durch chemisches Polieren zunehmend an Bedeutung. Beim chemischen Polieren/Entgraten werden die zu polierenden Gegenstände, die an entsprechenden Tragelementen hängen oder in Körben oder dergleichen angeordnet sind, in einen Elektrolyten, d.h. in das chemische Polierbad, eingesenkt und nach einer gewissen Expositionszeit aus diesem herausgenommen. Danach werden die Gegenstände in Spülbädern/Folgebädern nachbehandelt.

Nach dem heutigen Stand der Technik werden zur Behandlung von Kohlenstoffstählen in der Regel entweder Elektrolyte aus Gemischen von Ammoniumhydrogendifluorid (NH₄HF₂) und Schwefelsäure oder von NH₄HF₂ und Oxalsäure beziehungsweise anderen organischen Säuren eingesetzt. Zur Unterstützung der chemischen Polierwirkung wird in oben genannte Formulierungen H₂O₂ zugegeben.

Es ist jedoch allgemein bekannt, dass Eisenionen die Zersetzung von H₂O₂ im saurem Medium katalysieren. Man sucht dementsprechend laufend nach Additiven, die H₂O₂ bei diesen Polierbädern stabilisieren. Unter den Additiven finden sich Harnstoff, Sulfonsäurederivate, Hydroxychinolinderivate, Phosphorsäure und Phosphorsäureverbindungen. In den meisten Fällen erhöht man die Ammoniumionen- und/oder NH₄HF₂- und Harnstoff-Konzentration, um die H₂O₂-Konzentration in den Polierbädern besser zu stabilisieren. Diese Formulierung führt jedoch zu starker Stickstoff- und Ammonium-Belastung im Abwasser.

### Darstellung der Erfindung

Aufgabe der vorliegenden Erfindung ist es, ein verbessertes Polier- und Entgratungsmittel für Werkstücke aus Kohlenstoffstahl bereitzustellen, mit dem insbesondere die obigen Nachteile vermieden werden. Eine weitere Aufgabe der Erfindung besteht darin, ein verbessertes Verfahren zum chemischen Polieren und Entgraten von Werkstücken aus Kohlenstoffstahl anzugeben.

Die obigen Aufgaben werden erfindungsgemäss gelöst durch das im Anspruch 1 definierte Polier- und Entgratungsmittel sowie durch das im Anspruch 14 definierte Verfahren.

Unter dem Begriff "Kohlenstoffstahl" werden hier entsprechend der üblichen Definition nichtveredelte Stähle verstanden, deren Kohlenstoffanteil bis zu 1,5 Gew.-% beträgt. Der Begriff "im Wesentlichen ammoniumfrei" bedeutet im vorliegenden Zusammenhang, dass im Polier-und Entgratungsmittel höchstens geringe Anteile an Ammonium vorliegen. Insbesondere ist die Totalkonzentration von Ammonium weitaus geringer als die Totalkonzentration von Fluorid und beträgt beispielsweise höchstens ein Zehntel der Fluoridkonzentration oder noch weniger. Die nachfolgend angegebenen Konzentrationen beziehen sich jeweils auf das als Prozessbad vorliegende Polier- und Entgratungsmittel.

Das erfindungsgemässe Polier-und Entgratungsmittel enthält Wasserstoffperoxid und Fluorwasserstoffsäure sowie wenigstens einen Stabilisator für Wasserstoffperoxid. Als Stabilisatoren kommen grundsätzlich Substanzen in Frage, welche in saurer Umgebung die unerwünschte, vornehmlich durch Eisenionen induzierte Zersetzung von H₂O₂ verhindern oder zumindest verzögern.

Dadurch, dass das erfindungsgemässe Polier- und Entgratungsmittel im Wesentlichen ammoniumfrei ist, kann die Stickstoff- und Ammonium-Belastung im Abwasser vermieden werden. Mit einer HF-Konzentration von 0,1 bis 10 Gew.-% und einem molaren Verhältnis von HF zu H₂O₂ im Bereich von 0,1 bis 1,4 wird in einem weiten Anwendungsbereich eine gute Polier- und Entgratungswirkung erreicht.

Beim erfindungsgemässen Verfahren wird ein Werkstück aus einem Kohlenstoffstahl mit einem Kohlenstoffgehalt von bis zu 1,5 Gew.-% in erfindungsgemässes Polier- und Entgratungsmittel eingetaucht und dort während einer vorbestimmten Einwirkungszeit belassen.

Bevorzugte Ausgestaltungen des Polier- und Entgratungsmittels sind in den abhängigen Ansprüchen definiert.

Die Konzentration der Fluorwasserstoffsäure wird umso höher gewählt, je stärker die Polier- und Entgratungswirkung sein soll bzw. je schneller das Ergebnis erreicht werden soll. Vorzugsweise liegt die HF-Konzentration im Bereich von 1 bis 5 Gew.-%.

Man kann die Stabilisatoren in H₂O₂ und Säuren zu einer wässrigen, sauren Oxidierlösung formulieren oder vorzugsweise in der konzentrierten, wässrigen H₂O₂-Lösung vorlegen. Es wurde gefunden, dass sich die durch Eisenionen induzierte katalytische Zersetzung von H₂O₂ in wässrigen, sauren Medium lenken lässt, indem man stabilisierend wirkende Mengen von den jeweiligen Stabilisatoren oder deren Salzen oder Mischungen derselben hinzufügt.

Gemäss einer ersten Ausgestaltung enthält das Polier- und Entgratungsmittel als Stabilisator ein aromatisches Diol oder Diolderivat, vorzugsweise Hydrochinon (= 1,4-Dihydoxybenzol) oder 2,5-Di-tert-Butylhydrochinon.

Vorzugsweise liegt dieses in einer Konzentration von 0,01 bis 5 Gew.-% vor. Gemäss einer weiteren Ausgestaltung enthält das Polier- und Entgratungsmittel als Stabilisator ein aliphatisches Diol, vorzugsweise Ethylenglycol, Propylenglycol oder ein Polyethylenglycol. Vorzugsweise liegt dieses in einer Konzentration von 0,1 bis 10 Gew.-% vor.

Gemäss einer weiteren Ausgestaltung enthält das Polier- und Entgratungsmittel als Stabilisator Glycoläther. Vorzugsweise beträgt dessen Konzentration 0,1 bis 10 Gew.-%.

Gemäss einer weiteren Ausgestaltung enthält das Polier- und Entgratungsmittel als Stabilisator einen Alkohol, vorzugsweise Propanol, t-Butanol oder Amylalkohol. Vorzugsweise liegt dieser in einer Konzentration von 0,1 bis 10 Gew.-% vor.

Gemäss einer weiteren Ausgestaltung enthält das Polier- und Entgratungsmittel als Stabilisator ein Amin, vorzugsweise Octylamin, Hydroxylamine, Diphenylamin oder N,N'-Di-sek-Butyl-p-phenylendiamin. Vorzugsweise liegt dieses in einer Konzentration von 0,1 bis 5 Gew.-% vor.

Gemäss einer weiteren Ausgestaltung enthält das Polier- und Entgratungsmittel als Stabilisator ein Chinol, vorzugsweise Benzochinon. Vorzugsweise liegt dieses in einer Konzentration von 0,1 bis 5 Gew.-% vor.

Gemäss einer weiteren Ausgestaltung enthält das Polier- und Entgratungsmittel als Stabilisator ein Chelatisierungsmittel, vorzugsweise das Trinatriumsalz der Methylglycindiessigsäure, 1-Hydroxyethan-1,1-diphosphonsäure oder das Dinatriumsalz der Morpholinomethandiphosphonsäure. Vorzugsweise liegt das Chelatisierungsmittel in einer Konzentration von 0,1 bis 5 Gew.-% vor.

Gemäss einer weiteren Ausgestaltung enthält das Polier- und Entgratungsmittel als Stabilisator ein Alkylphenol/Phenolderivat, vorzugsweise 2-tert-Butyl-4-methoxyphenol, 4-tert-Butylpenol, 2,6-Di-tert-butyl-4-methylphenol, 2,4-Di-tert-butylphenol, 4-Methoxyphenol, 2-2-Methylen bis (4-methyl-6-tertbutylphenol) oder 4-4-Thiobis (2-tert-butyl-5-methylphenol).

Gemäss noch einer weiteren Ausgestaltung enthält das Polier- und Entgratungsmittel als Stabilisator ein Benzotriazol, vorzugsweise 1,2,3-Benzotriazol, Tolytriazol, 2-(2H-Benzotriazol-2-yl)-4,6-di-tert-phenylphenol oder 2-(2H-Benzotriazol-2-yl)-4-(1,1,3,3-tetramethylbutyl)-phenol.

Grundsätzlich kommen auch Kombinationen der obigen Ausgestaltungen, d.h. die Zugabe von zwei oder sogar mehr Stabilisatoren in Betracht.

Weiterhin ist es in gewissen Fällen vorteilhaft, wenn das wasserbasierte Polier-und Entgratungsmittel einen Lösungsvermittler enthält, insbesondere wenn der Stabilisator in wässrigem Medium schlecht löslich ist. Vorteilhafterweise hat der Lösungsvermittler auch eine Stabilisatorwirkung, wie dies beispielsweise bei Glycoläther oder bei Alkoholen oder aromatischen Aminen der Fall ist.

### Wege zur Ausführung der Erfindung

### Beispiel 1

Dieses Beispiel betrifft das chemische Polieren/Entgraten von Kohlenstoffstahl in einer Lösung, die keinen Stabilisator enthält. Man stellt eine Lösung her, die 20 g/l Fluorwasserstoffsäure, berechnet als 100% Säure, 10 g/l Eisen in Form von Eisenpulver und 60 g/l H₂O₂, ausgedrückt in 100%-igem H₂O₂ enthält. Dementsprechend beträgt das molare Verhältnis von Fluorwasserstoffsäure zu Wasserstoffperoxid ungefähr 0,57. Man hält die Temperatur der Lösung unter 30°C. Nach 6 Std. enthält die Lösung nur noch 8% des ursprünglich zugegebenen H₂O₂.

### Beispiel 2

Man stellt eine Lösung her, die 28 g/l Fluorwasserstoffsäure, berechnet als 100% Säure, 10,97 g/l Eisen in Form von Eisenpulver und 77.6 g/l H₂O₂, ausgedrückt in 100%-igem H₂O₂, enthält. Dementsprechend beträgt das molare Verhältnis von Fluorwasserstoffsäure zu Wasserstoffperoxid ungefähr 0,61. Weiterhin enthält die Lösung 5,3 g/l t-Butanol als Stabilisator. Man hält die Temperatur der Lösung unter 30°C. Nach 48 Std. enthält die Lösung noch 55 g/l H₂O₂, was einem Anteil von über 70% des ursprünglich zugegebenen H₂O₂ entspricht.

### Beispiel 3

Ein Werkstück aus einem Kohlenstoffstahl mit einem Kohlenstoffanteil von 0,2 Gew.-% wurde in einem Prozessbad bei 23°C während 10 Min. behandelt. Das Prozessbad bestand dabei aus einer wässrigen Lösung, enthaltend 28 g/l Fluorwasserstoffsäure, berechnet als 100% Säure, sowie 77.6 g/l H₂O₂, ausgedrückt in 100%-igem H₂O₂, und 5,3 g/l t-Butanol als Stabilisator. Durch die Behandlung wurde die Rauigkeit des Werkstücks wie folgt reduziert (Tabelle):

**Tabelle: Rauigkeit des Werkstücks vor und nach der Behandlung**

| Rauigkeitsparameter | vorher | nachher |
|---|---|---|
| Rₐ | 0,91 | 0,25 |
| R_{z} | 5,5 | 1,98 |
| Rₘ | 5,8 | 2,9 |

## Patentansprüche

**1.** Polier- und Entgratungsmittel für Werkstücke aus Kohlenstoffstahl, enthaltend Wasserstoffperoxid und Fluorwasserstoffsäure sowie wenigstens einen Stabilisator für Wasserstoffperoxid, **dadurch gekennzeichnet, dass** es im Wesentlichen ammoniumfrei ist, die Konzentration der Fluorwasserstoffsäure 0,1 bis 10 Gew.-% beträgt und das molare Verhältnis von Fluorwasserstoffsäure zu Wasserstoffperoxid 0,1 bis 1,4 beträgt.

**2.** Polier- und Entgratungsmittel nach Anspruch 1, **dadurch gekennzeichnet, dass** die Konzentration der Fluorwasserstoffsäure 1 bis 5 Gew.-% beträgt.

**3.** Polier- und Entgratungsmittel nach Anspruch 1, **dadurch gekennzeichnet, dass** es als Stabilisator ein aromatisches Diol, vorzugsweise Hydrochinon (= 1,4-Dihydoxybenzol) oder 2,5-Di-tert-Butylhydrochinon, enthält.

**5.** Polier- und Entgratungsmittel nach Anspruch 1, **dadurch gekennzeichnet, dass** es als Stabilisator ein aliphatisches Diol, vorzugsweise Ethylenglycol, Propylenglycol oder ein Polyethylenglycol enthält.

**6.** Polier- und Entgratungsmittel nach Anspruch 1, **dadurch gekennzeichnet, dass** es als Stabilisator Glycoläther enthält.

**7.** Polier- und Entgratungsmittel nach Anspruch 1, **dadurch gekennzeichnet, dass** es als Stabilisator einen Alkohol, vorzugsweise Propanol, t-Butanol oder Amylalkohol enthält.

**8.** Polier- und Entgratungsmittel nach Anspruch 1, **dadurch gekennzeichnet, dass** es als Stabilisator ein Amin, vorzugsweise Octylamin, Hydroxylamine, Diphenylamin oder N,N'-Di-sek-Butyl-p-phenylendiamin enthält.

**9.** Polier- und Entgratungsmittel nach Anspruch 1, **dadurch gekennzeichnet, dass** es als Stabilisator ein Chinol, vorzugsweise Benzochinon, enthält.

**10.** Polier- und Entgratungsmittel nach Anspruch 1, **dadurch gekennzeichnet, dass** es als Stabilisator ein Chelatisierungsmittel, vorzugsweise das Trinatriumsalz der Methylglycindiessigsäure, 1-Hydroxyethan-1,1-diphosphonsäure oder das Dinatriumsalz der Morpholinomethandiphosphonsäure enthält.

**11.** Polier- und Entgratungsmittel nach Anspruch 1, **dadurch gekennzeichnet, dass** es als Stabilisator ein Alkylphenol/Phenolderivat, vorzugsweise 2-tert-Butyl-4-methoxyphenol, 4-tert-Butylpenol, 2,6-Di-tert-butyl-4-methylphenol, 2,4-Di-tert-butylphenol, 4-Methoxyphenol, 2-2-Methylen bis (4-methyl-6-tertbutylphenol) oder 4-4-Thiobis (2-tert-butyl-5-methylphenol), enthält.

**12.** Polier- und Entgratungsmittel nach Anspruch 1, **dadurch gekennzeichnet, dass** es als Stabilisator ein Benzotriazol, vorzugsweise 1,2,3-Benzotriazol, Tolytriazol, 2-(2H-Benzotriazol-2-yl)-4,6-di-tert-phenylphenol oder 2-(2H-Benzotriazol-2-yl)-4-(1,1,3,3-tetramethylbutyl)-phenol, enthält.

**13.** Polier- und Entgratungsmittel nach mindestens einem der Ansprüche 1 bis 12, welches gegebenenfalls einen Lösungsvermittler, vorzugsweise Glycoläther oder einen Alkohol, enthält.

**14.** Verfahren zum chemischen Polieren und Entgraten von Werkstücken aus Kohlenstoffstahl, wobei man ein Werkstück aus einem Kohlenstoffstahl mit einem Kohlenstoffgehalt von bis zu 1,5 Gew.-% in Polier- und Entgratungsmittel nach einem der Ansprüche 1 bis 12 eintaucht und dort während einer vorbestimmten Einwirkungszeit belässt.
